# EUROPEAN PATENT APPLICATION

(11) **EP 3 795 352 A1**
(43) Date of publication of application: **24.03.2021**
(21) Application number: 19802640.3
(22) Date of filing: 14.05.2019
(51) Int. Cl.: B32B 27/30, B05D 3/02, B05D 7/24, B32B 27/20, C09D 7/61, C09D 127/12, C09D 201/04

(54) **ELECTRONIC ARTICLE AND METHOD FOR FORMING FILM ON ELECTRONIC ARTICLE**

(30) Priority: 18.05.2018 JP 2018096584
(71) Applicant: OMRON Corporation, Shiokoji-dori, Shimogyo-ku, Kyoto-shi Kyoto 600-8530 (JP)
(72) Inventor: IMAIZUMI, Toyohiro, Kyoto 619-0283 (JP); FUKUHARA, Tomohiro, Kyoto 619-0283 (JP); NAKAMURA, Masaki, Kyoto 619-0283 (JP); TATSUNO, Yosuke, Kyoto 619-0283 (JP)
(74) Representative: Becker, Eberhard
(86) International application number: PCT/JP2019/019116
(87) International publication number: WO 2019/221117

(57) **Abstract**

With a view to simultaneously achieving reduction in sputter adhesion to an electronic article and improvement in durability required for maintenance of a coat, the electronic article (10) according to the present invention has a coat (3) which is formed on the surface of an underlayer member (1) and which is composed of a baked and cured product of a coat solution of a binder resin comprising a fluorine-based resin and a ceramic filler, wherein the fluorine-based resin is distributed increasingly more in the coat (3) toward the surface on the side opposite to the underlayer member (1).

## Description

### [Technical Field]

The present invention relates to an electronic article and a method for forming a film on the electronic article.

### [Background Art]

Conventionally, in an electronic article such as, for example, a proximity sensor, a metal such as Fe has been utilized as a material for a housing thereof. Therefore, when such an electronic article is used at welding sites, since spatters generated during welding are also of the same type of metal as the housing, the spatters may adhere or weld to the housing. Then, the electronic article may malfunction due to the adhesion or welding of the spatters to the housing. Therefore, at welding sites, in order to prevent such malfunction of an electronic article, maintenance work for removing the spatters adhered or fused to the housing with a metal brush or the like is required on a regular basis, and thereby a lot of time and effort is required.

Regarding such a problem related to spattering, measures to reduce adhesion or fusion of spatters to a housing have been taken by forming a film on the housing. For example, Patent Literature 1 discloses a spatter adhesion inhibitor that is used in forming such a film.

Also, Patent Literature 2 discloses a method of forming a fluorine-based resin film layer on cooking devices such as inner pots of rice cookers, hot plates, or frying pans, or on members such as fixing rollers or the like disposed in copying machines or laser printers.

### [Reference List]

### [Patent Literature]

[Patent Literature 1]
   Japanese Patent Publication "Japanese Patent Laid-Open No. 2012-081492 (published on April 26, 2012)"
[Patent Literature 2]
   Japanese Patent Publication "Japanese Patent Laid-Open No. 2013-027875 (published on February 7, 2013)"

### [Summary of Invention]

### [Technical Problem]

In the technology described in Patent Literature 1, an amount of spatters adhering to a housing can be reduced, and a maintenance work cycle can be lengthened. However, maintenance work still needs to be done. Further, during maintenance, a film may peel off from the housing, and a surface of the housing serving as an underlayer may be exposed. Then, when spatters adhere to the exposed surface of the housing, there is a likelihood that malfunction of the electronic article will occur. A film that is intended for welding sites is required to have maintenance durability such that it cannot easily peel off from the housing and it cannot easily become scratched.

The technology described in Patent Literature 1 still has room for improvement from the perspective of achieving both reduction in adhesion of spatters to an electronic article main body and improvement in maintenance durability of the film.

One aspect of the present invention is directed to realizing an electronic article and a method for forming a film on the electronic article in which both reduction in adhesion of spatters to the electronic article main body and improvement in maintenance durability of the film are achieved.

### [Solution to Problem]

In order to solve the above-described problems, an electronic article according to one aspect of the present invention includes an underlayer member, and a film formed on a surface of the underlayer member, in which the film is made of a calcined and cured product of a film solution of a binder resin containing a fluorine-based resin and a ceramic filler, and the fluorine-based resin is increasingly distributed toward a surface of the film on a side opposite to the underlayer member.

Also, in order to solve the above-described problems, a method for forming a film according to one aspect of the present invention is a method for forming a film which forms a film on an underlayer member, and includes an application step of applying a film solution of a binder resin containing a fluorine-based resin and a ceramic filler on a surface of the underlayer member, and a calcination and curing step of calcinating the film solution by heating to a temperature within a range from a higher temperature of a melting point of the fluorine-based resin and a melting point of the binder resin to a lower temperature of a decomposition temperature of the fluorine-based resin and a decomposition temperature of the binder resin, and curing the film solution.

Further, in order to solve the above-described problems, a film according to one aspect of the present invention is a film formed on a surface of an underlayer member, in which the film is made of a calcined and cured product of a film solution of a binder resin containing a fluorine-based resin and a ceramic filler, and the fluorine-based resin is increasingly distributed toward a surface on an opposite side to the underlayer member.

### [Advantageous Effects of Invention]

According to one aspect of the present invention, both reduction in adhesion of spatters to the electronic article and improvement in maintenance durability of the film can be achieved.

### [Brief Description of Drawings]

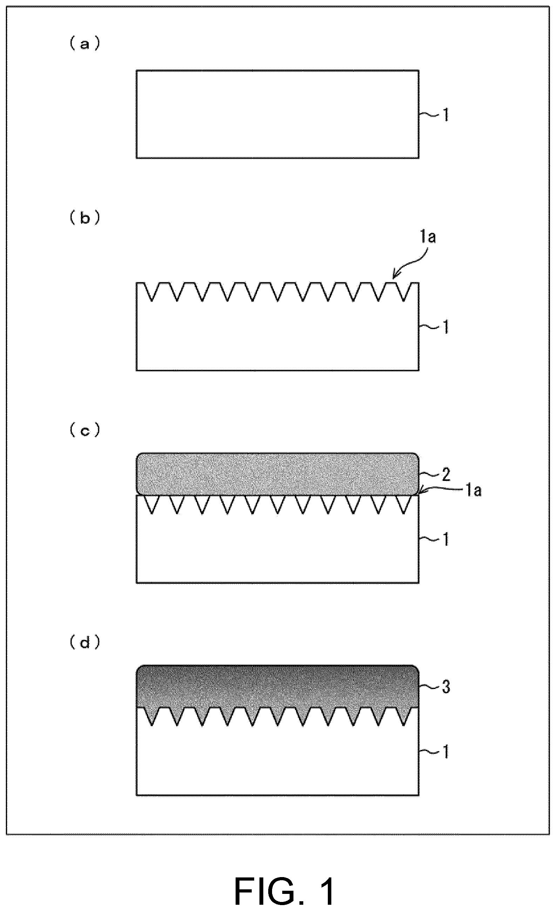

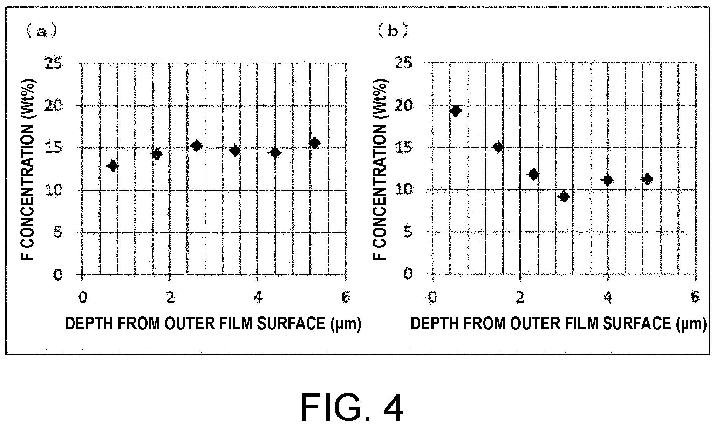

(a) to (d) of Fig. 1 are views illustrating each step of a method for forming a film according to one embodiment of the present invention.
Fig. 2 is an explanatory view for explaining a film formed by the method for forming a film illustrated in (a) to (d) of Fig. 1.
Fig. 3 is a view illustrating a configuration of an evaluation device that evaluates spatter adhesion.
(a) of Fig. 4 is a graph showing a concentration distribution of a fluorine-based resin with respect to a depth from a film outer surface of the film of comparative example 7, and (b) of Fig. 4 is a graph showing a concentration distribution of a fluorine-based resin with respect to a depth from a film outer surface of the film of example 5.

### [Description of Embodiments]

Hereinafter, one embodiment of the present invention will be described in detail. Unless otherwise specified in the present specification, "A to B" representing a numerical range indicates "not less than A and not more than B."

### §1 Application example

The inventors of the present application have intensively developed a film and a method for forming a film in which both reduction in adhesion of spatters to an underlayer member and improvement in maintenance durability of the film can be achieved.

As a result, an electronic article in which both reduction in adhesion of spatters to an electronic article main body and improvement in maintenance durability of the film can be achieved has been successfully developed by applying a film solution of a binder resin containing a fluorine-based resin and a ceramic filler to the electronic article main body, heating it to a temperature within a predetermined range to calcine it, and curing the film solution. Specifically, new findings that can solve the problems described above by setting a calcination temperature of the film solution to a temperature within a range from a higher temperature of a melting point of the fluorine-based resin and a melting point of the binder resin to a lower temperature of a decomposition temperature of the fluorine-based resin and a decomposition temperature of the binder resin have been found, and thus the invention of the present application has been completed.

Normally, a film made of a fluorine-based resin easily becomes scratched while spatters cannot easily adhere thereto. That is, in a case in which a film solution of a binder resin containing a fluorine-based resin and a ceramic filler is calcined to form a film, since a melt formed of the fluorine-based resin is deposited on a surface when a calcination temperature is set to a temperature equal to or higher than a melting point of the fluorine-based resin, the film has been assumed to have a structure that easily becomes scratched. Therefore, setting the calcination temperature to a temperature equal to or higher than the melting point of the fluorine-based resin is thought to be contradictory to improving a peeling strength of the film (improvement in maintenance durability of the film).

However, the inventors of the present application have conducted intensive research of their own and found that ease of the film becoming scratched is not affected that much even when the calcination temperature is set to a temperature equal to or higher than the melting point of the fluorine-based resin. It is thought that the ease of the film becoming scratched is caused by adhesion between the film and an underlayer member, rather than by surface deposition of a melt layer of the fluorine-based resin as has been conventionally thought. Further, it has been found that, when the calcination temperature is set to a temperature equal to or higher than the melting point of the fluorine-based resin, wettability of the film solution with respect to the underlayer surface is improved, and the obtained film has satisfactory adhesion to the underlayer member. The technological idea of the invention of the present application based on these findings cannot be predicted from conventional knowledge and has been independently completed by the inventors of the present application.

(a) to (d) of Fig. 1 are views illustrating each step of a method for forming a film according to one embodiment of the present invention. The method for forming a film according to the present embodiment is a method of forming a film 3 on an underlayer member 1 illustrated in (a) of Fig. 1. The underlayer member 1 on which a film is to be formed is not particularly limited and is preferably a housing that constitutes an electronic device used at welding sites. As such electronic devices, proximity sensors, cables, connectors, actuators, and the like can be exemplified.

The method for forming a film according to the present embodiment includes a surface processing treatment step, an application step, and a calcination and curing step.

In the surface processing treatment step, the underlayer member 1 is treated to have a predetermined surface roughness Ra. As illustrated in (b) of Fig. 1, a surface processing treatment surface 1a is formed on the underlayer member 1 by the surface processing treatment step. The surface processing treatment surface 1a is a fine irregular surface.

Then, as illustrated in (c) of Fig. 1, in the application step, a film solution 2 is applied to the surface processing treatment surface 1a of the underlayer member 1. The film solution 2 is a solution in which a binder resin is dissolved in a solvent and contains a particulate fluorine-based resin and a solid ceramic filler.

Then, in the calcination and curing step, as illustrated in (c) of Fig. 1, the film solution 2 is heated and calcined, and then the film solution 2 is cured. More specifically, the film solution 2 is calcined at a calcination temperature T, and then the film solution 2 is cured by lowering the temperature from the calcination temperature T to room temperature. As a result, as illustrated in (d) of Fig. 1, the film 3 made of a cured product of the film solution 2 is formed on the underlayer member 1.

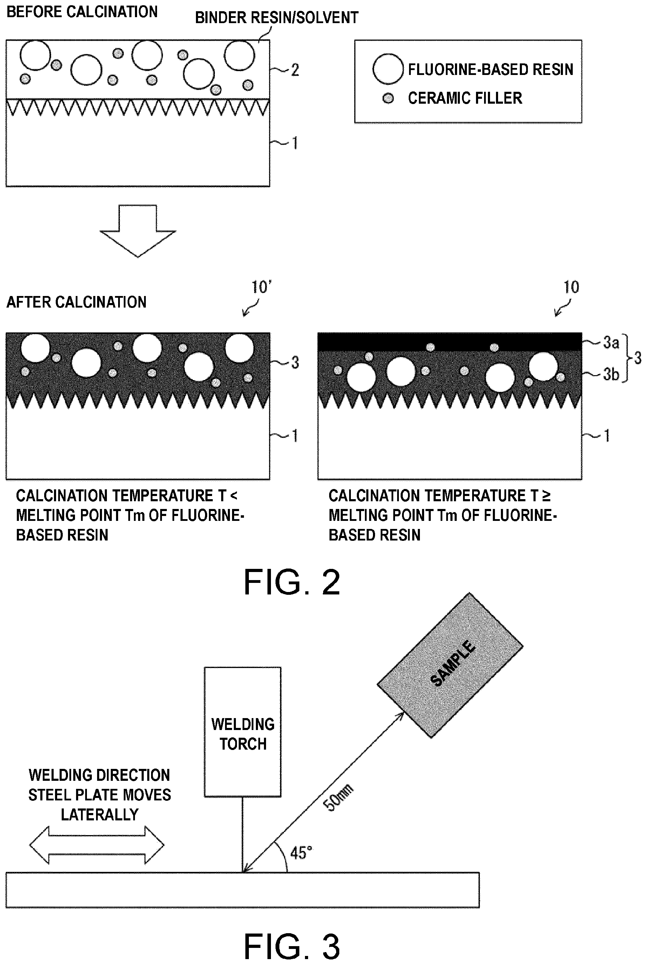

Fig. 2 is an explanatory view for explaining the film 3 formed by the method for forming a film illustrated in (a) to (d) of Fig. 1. Fig. 2 illustrates an electronic article 10' in which the film 3 is formed under the condition of "calcination temperature T < melting point Tm of the fluorine-based resin," and an electronic article 10 in which the film 3 is formed under the condition of "calcination temperature T ≥ melting point Tm of the fluorine-based resin," as in the present embodiment.

As illustrated in Fig. 2, the electronic article 10 according to the present embodiment includes the underlayer member 1 and the film 3 formed on a surface of the underlayer member 1. The film 3 is made of a calcined and cured product of the film solution 2 of the binder resin containing a fluorine-based resin and a ceramic filler.

Here, in the method for forming a film according to the present embodiment, the calcination temperature T of the film solution 2 in the calcination and curing step is set within a range from a higher temperature of the melting point Tm of the fluorine-based resin and the melting point of the binder resin to a lower temperature of the decomposition temperature of the fluorine-based resin and the decomposition temperature of the binder resin. That is, in the method for forming a film according to the present embodiment, the calcination temperature T is set to be equal to or higher than the melting point Tm of the fluorine-based resin contained in the film solution 2.

When the calcination temperature T is set as described above, the solvent contained in the film solution 2 is vaporized into a gas. Also, the binder resin becomes a molten material and improves wettability with respect to the underlayer member 1. Thereby, the film solution 2 is cured in a state of being wet and spread on the surface of the underlayer member 1. As a result, the film 3 which is a cured product of the film solution 2 has improved adhesion to the underlayer member 1.

Also, since the calcination temperature T is set to be equal to or higher than the melting point Tm of the fluorine-based resin, as illustrated in Fig. 2, in the film 3 of the electronic article 10, the fluorine-based resin is increasingly distributed toward a surface of the film 3 on a side opposite to the underlayer member 1. That is, the film 3 has a fluorine-based resin-rich layer 3a formed of a melt-solidified product of the fluorine-based resin, and a solution cured layer 3b formed of a cured product of the film solution 2. The fluorine-based resin-rich layer 3a is formed on a portion of the film 3 exposed to the outside. On the other hand, when the calcination temperature T is set to be less than the melting point Tm of the fluorine-based resin, as illustrated in Fig. 2, the film 3 of the electronic article 10' does not have the fluorine-based resin-rich layer 3a and is entirely formed of the cured product of the film solution.

The melt-solidified product of the fluorine-based resin constituting the fluorine-based resin-rich layer 3a has water repellency. Therefore, since the fluorine-based resin-rich layer 3a having water repellency is formed on the portion of the film 3 exposed to the outside, spatters cannot easily adhere to the film 3.

From the above, according to the method for forming a film according to the present embodiment, it is possible to realize an electronic article in which both reduction in adhesion of spatters to the electronic article main body (the underlayer member 1) and improvement in maintenance durability of the film 3 are achieved. Also, in the electronic article according to the present embodiment made by such a method for forming a film, the fluorine-based resin is increasingly distributed toward the surface of the film 3 on a side opposite to the underlayer member 1 as described above. Therefore, the electronic article according to the present embodiment is an article in which both reduction in adhesion of spatters to the electronic article main body (the underlayer member 1) and improvement in maintenance durability of the film 3 are achieved.

The method for forming a film according to the present embodiment includes the surface processing treatment step in which a surface processing treatment is performed on the underlayer member 1. Thus, in the electronic article 10 according to the present embodiment, a surface processing treatment surface 1a, which is a fine irregular surface, is formed on a surface of the underlayer member 1 on the film 3 side. Since the surface processing treatment surface 1a is formed as described above, adhesion between the underlayer member 1 and the film 3 is further improved in the electronic article 10.

Further, the surface processing treatment step is a step that is added as appropriate according to a composition or an amount of the binder resin of the film solution 2. That is, in the method for forming a film according to the present embodiment, the adhesion between the film 3 and the underlayer member 1 can be improved by setting the calcination temperature T in the calcination and curing step as described above without using the surface processing treatment.

### §2 Configuration example

### (Underlayer member 1)

The underlayer member 1 is not particularly limited as long as it is a material that can withstand the calcination temperature T in the calcination and curing step. Particularly, stainless steel (SUS), which is a material of a housing of an electronic article main body at welding sites, is preferable. Specifically, SUS303, SUS303CU, SUS304, and the like can be exemplified as such stainless steel. Of these, SUS304 is preferable.

In addition to the stainless steel described above, the material of the underlayer member 1 may be a material having a melting point equal to or higher than the calcination temperature T. For example, the material of the underlayer member 1 may be a material having a melting point of 360°C or higher such as polybenzimidazole (PBI), polyimide (PI), an epoxy resin (EP), and a liquid crystal polymer (LCP).

### (Film solution 2)

As described above, the film solution 2 is a solution in which a binder resin is dissolved in a solvent and contains a particulate fluorine-based resin and a solid ceramic filler. The binder resin, the fluorine-based resin, and the ceramic filler are not particularly limited as long as they are compounds capable of improving adhesion between the film 3 and the underlayer member 1 and forming the fluorine-based resin-rich layer 3a having water repellency.

The binder resin is a resin for allowing a particulate fluorine-based resin and a solid ceramic filler to combine with the underlayer member 1 and is a thermoplastic resin, but may also be a thermosetting resin such as an epoxy resin or a silicone resin, and may be a resin that is in a liquid state at the calcination temperature T. The binder resin may be any resin that dissolves in a solvent and can be appropriately set according to the fluorine-based resin, the ceramic filler, the solvent, and a material of the underlayer member 1. The binder resin is preferably a thermoplastic resin that melts and does not thermally decompose at a temperature equal to or higher than the melting point of the fluorine-based resin, and may be, for example, at least one resin selected from the group consisting of polyamide-imide (PAI) and polyphenylene sulfide (PPS). Also, the binder resin may be a mixture of PAI and PPS. Further, a melting point and a decomposition temperature of PAI are 300° C and 410°C, respectively. A melting point and a decomposition temperature of PPS are 290°C and 350°C, respectively.

Also, a concentration (% by weight) of the binder resin with respect to the film solution 2 may be any concentration allowing sufficient wetting and spreading with respect to the underlayer member 1 at the calcination temperature T. The concentration of the binder resin with respect to the film solution 2 is preferably 5% by weight or more and more preferably 10% by weight or more, and preferably 30% by weight or less and more preferably 20% by weight or less. When the concentration of the binder resin is less than 5% by weight, the film solution 2 does not spread uniformly on the underlayer member 1. Also, when the concentration of the binder resin exceeds 30% by weight, this is not preferable because there is not sufficient wetting and spreading. Also, a form of the film solution 2 used is not particularly limited, and a form in which two liquids are mixed immediately before use is preferable.

Also, a proportion of the binder resin in the film 3 after film formation is preferably 55% by weight or more and more preferably 57.5% by weight or more, and preferably 65% by weight or less and more preferably 62.5% by weight or less.

Also, the solvent is not particularly limited as long as it can dissolve the binder resin and a boiling point is equal to or lower than the melting points of the binder resin and the fluorine-based resin. As the solvent, for example, N-methyl-2-pyrrolidone (NMP), dimethylacetamide (DMAc), N,N-dimethylformamide (DMF), xylene, and the like can be exemplified. Further, a boiling point of NMP is 202°C. A boiling point of DMAc is 165°C. A boiling point of DMF is 153°C. Also, a boiling point of xylene is 144°C.

The ceramic filler functions as a reinforcing agent for the fluorine-based resin and the binder resin. A material of the ceramic filler is not particularly limited as long as it does not impair the adhesion between the underlayer member 1 and the film 3 and a spatter adhesion inhibiting property (water repellency). The material of the ceramic filler may be, for example, a material having a melting point higher than that of iron constituting the spatter, and examples thereof include zirconium dioxide (ZrO₂), titanium dioxide (TIO₂), titanium nitride (TiN), aluminum oxide (Al₂O₃), aluminum nitride (AlN), boron nitride (BN), silicon carbide (SiC), tungsten carbide (WC), and the like. Also, the ceramic filler may be a mixture in which at least two types of the above-exemplified materials are combined.

Also, a concentration (% by weight) of the ceramic filler with respect to the film solution 2 may be a concentration that does not impair the adhesion between the underlayer member 1 and the film 3 and the spatter adhesion inhibiting property. The concentration of the ceramic filler with respect to the film solution 2 is preferably 0.5% by weight or more and more preferably 1% by weight or more, and preferably 6% by weight or less and more preferably 4% by weight or less. When the concentration of the ceramic filler is less than 0.5% by weight, of the maintenance durability and the spatter adhesion, the maintenance durability deteriorates. Also, when the concentration of the ceramic filler exceeds 6% by weight, of the maintenance durability and the spatter adhesion, the spatter adhesion deteriorates.

A proportion of the ceramic filler in the film 3 after film formation is preferably 5% by weight or more and more preferably 8% by weight or more, and preferably 15% by weight or less and more preferably 12% by weight or less.

The fluorine-based resin is not particularly limited and examples thereof include, for example, polytetrafluoroethylene (PTFE), polychlorotrifluoroethylene (PCTFE, CTFE), polyvinylidene fluoride (PVDF), polyvinyl fluoride (PVF), a tetrafluoroethylene-perfluoroalkyl vinyl ether copolymer (PFA), a tetrafluoroethylene-hexafluoropropylene copolymer (FEP), an ethylene-tetrafluoroethylene copolymer (ETFE), an ethylene-chlorotrifluoroethylene copolymer (ECTFE), and the like, and particularly, at least one resin selected from the group consisting of polytetrafluoroethylene (PTFE), a tetrafluoroethylene-perfluoroalkyl vinyl ether copolymer (PFA), and an ethylene-tetrafluoroethylene copolymer (ETFE) is preferable. The fluorine-based resin may be a mixture in which at least two types of the above-exemplified materials are combined. Further, a melting point and a decomposition temperature of PTFE are 327°C and 390°C, respectively. A melting point and a decomposition temperature of the PFA are 310°C and 380°C, respectively. A melting point and a decomposition temperature of the ETFE are 270°C and 350°C, respectively.

Also, a concentration (% by weight) of the fluorine-based resin with respect to the film solution 2 may be a concentration that does not impair the adhesion between the underlayer member 1 and the film 3 and the spatter adhesion inhibiting property. The concentration of the fluorine-based resin with respect to the film solution 2 is preferably 3% by weight or more and more preferably 5% by weight or more, and preferably 15% by weight or less and more preferably 10% by weight or less. When the concentration of the fluorine-based resin is less than 3% by weight, this is not preferable because a surface fluorine concentration of a solution solidified layer decreases and spatter resistance deteriorates. Also, when the concentration of the fluorine-based resin exceeds 15% by weight, this is not preferable because the surface fluorine concentration of the solution solidified layer increases, a hardness decreases, and maintenance durability deteriorates.

A proportion of the fluorine-based resin in the film 3 after film formation is preferably 25% by weight or more and more preferably 28% by weight or more, and preferably 35% by weight or less and more preferably 33% by weight or less.

### (Application step)

An application method of the film solution 2 with respect to the underlayer member 1 in the application step can employ conventionally known methods. As the application method of the film solution 2, for example, a dipping method, a spin coating method, a spray coating method, and the like can be exemplified. Of these methods, it is particularly preferable to apply the film solution 2 using a spray coating method.

Also, in the application step, the film solution 2 may be applied after the underlayer member 1 is heated or while the underlayer member 1 is being heated. As a result, wettability of the film solution 2 with respect to the underlayer member 1 is improved. A heating temperature of the underlayer member 1 is 100°C or higher, and preferably 120°C or higher and 140°C or lower. Also, a heating time of the underlayer member 1 is 10 minutes or more, and preferably 20 minutes or more. More specifically, the heating temperature of the underlayer member 1 is 120°C and the heating time is 20 minutes.

### (Surface processing treatment step)

The surface processing treatment step can employ any conventionally known technology as long as the underlayer member 1 can be surface-processed with the predetermined surface roughness Ra. Particularly, a blasting treatment is preferably employed from a viewpoint of realizing a surface roughness Ra that improves the adhesion between the underlayer member 1 and the film 3.

Also, conventionally known technologies can be applied to the blasting treatment. For example, a sandblasting treatment in which fine particles are mixed with and sprayed into compressed air compressed by a compressor can be applied.

As the fine particles used for the sandblasting treatment, conventionally used materials can be used. As the suitable sandblasting treatment, for example, shot blasting with #100 alumina fine particles can be exemplified.

Also, the surface roughness Ra (JIS B 0601) of the surface processing treatment surface 1a on the underlayer member 1 may be in a range in which adhesion to the film 3 is not impaired, and is preferably greater than 0.3 µm and more preferably greater than 1 µm. When the surface roughness Ra of the surface processing treatment surface 1a is less than 0.3 µm, this is not preferable because an anchor effect with respect to the film is reduced and the adhesion deteriorates.

### (Calcination and curing step)

The calcination temperature T of the film solution 2 in the calcination and curing step is set within a range from a higher temperature of the melting point Tm of the fluorine-based resin and the melting point of the binder resin to a lower temperature of the decomposition temperature of the fluorine-based resin and the decomposition temperature of the binder resin. That is, a lower limit temperature of the calcination temperature T is determined according to the melting point Tm of the fluorine-based resin and the melting point of the binder resin. Also, an upper limit temperature of the calcination temperature T is determined according to the decomposition temperature of the fluorine-based resin and the decomposition temperature of the binder resin.

For example, when the film solution 2 contains PTFE as the fluorine-based resin and PAI as the binder resin, the calcination temperature T is set to a temperature between the melting point Tm of PTFE and a decomposition temperature of PTFE, that is, a temperature between 327°C and 390°C. Also, when the fluorine-based resin is an ETFE and the binder resin is PAI, the calcination temperature T is set to a temperature between a melting point of PAI and a decomposition temperature of the ETFE, that is, a temperature between 290°C and 410°C.

In such a temperature range of the calcination temperature T, the fluorine-based resin in the film solution 2 is melted. Therefore, in the calcination and curing step, a melt of the fluorine-based resin is deposited on a surface on a side opposite to the underlayer member 1 in the film solution 2. Also, since the binder resin is also melted, wettability of the film solution 2 with respect to the underlayer member 1 improves. Therefore, the film 3, which is a calcined and cured product, has improved adhesion to the underlayer member, and the maintenance durability of the film 3 improves.

From a viewpoint of completely melting the fluorine-based resin and the binder resin in the film solution 2, when the melting point Tm of the fluorine-based resin is higher than the melting point of the binder resin, the lower limit temperature of the calcination temperature T is preferably the melting point Tm of the fluorine-based resin +0°C, more preferably the melting point Tm of the fluorine-based resin +5°C, and particularly preferably the melting point Tm of the fluorine-based resin +15°C. Also, when the melting point of the binder resin is higher than the melting point Tm of the fluorine-based resin, it is preferably the melting point of the binder resin +0°C, more preferably the melting point of the binder resin +5°C, and particularly preferably the melting point of the binder resin +15°C.

Also, from a viewpoint of maintaining the fluorine-based resin and the binder resin in the film solution 2 without them being decomposed, when the decomposition temperature of the fluorine-based resin is lower than the decomposition temperature of the binder resin, the upper limit temperature of the calcination temperature T is preferably the decomposition temperature of the fluorine-based resin -0°C, more preferably the decomposition temperature of the fluorine-based resin -10°C, and particularly preferably the decomposition temperature of the fluorine-based resin -20°C. Also, when the decomposition temperature of the binder resin is lower than the decomposition temperature of the fluorine-based resin, it is preferably the decomposition temperature of the binder resin -0°C, more preferably the decomposition temperature of the binder resin -10°C, and particularly preferably the decomposition temperature of the binder resin -20°C.

As a more specific setting of the calcination temperature T, when the fluorine-based resin is PTFE and the binder resin is PAI, the calcination temperature T is 327°C or higher, preferably 330°C or higher, and more preferably 340°C or higher, and 390°C or lower, preferably 380°C or lower, and more preferably 370°C or lower.

Also, although a calcination time in the calcination and curing step depends on the calcination temperature T, it is normally in a range of 30 to 90 minutes, and preferably in a range of 40 to 60 minutes. When the calcination time is too short, this is not preferable because vaporization of the solvent is insufficient, and a hardness cannot be secured. Also, when the calcination time is too long, this is not preferable because the fluorine-based resin or the binder resin is decomposed, and a strength decreases.

When the fluorine-based resin is PTFE and the binder resin is PAI, more specifically, the calcination temperature T is 360°C and the calcination time is 40 minutes.

Also, a thickness of the film 3 may be within a range in which uniform curing is possible in the calcination and curing step, and is preferably within a range in which characteristics such as spatter adhesion and maintenance durability required at welding sites can be sufficiently exhibited. The thickness of the film 3 is 10 µm or more, and preferably 15 µm or more.

### (Spatter adhesion)

Spatter adhesion is evaluated by an amount of spatters deposition adhering to the film 3. As a method for evaluating the spatter adhesion, a method in which an amount of spatters scattered from an arc welding point of steel deposited on the film 3 is evaluated as a deposition rate can be exemplified. Fig. 3 is a view illustrating a configuration of an evaluation device that evaluates spatter adhesion.

As illustrated in Fig. 3, this evaluation device includes a steel plate to be welded that moves in a lateral direction, and a welding torch for arc-welding the steel plate. Then, a sample to be evaluated is disposed at a position 50 mm away from an arc welding point of the steel plate in a direction of an angle of 45° with respect to the steel plate. Although not illustrated in Fig. 3, the film 3 is formed on a surface of the sample facing the welding point.

Using the evaluation device illustrated in Fig. 3, arc welding with the welding torch is performed for a predetermined time while the steel plate is moved in the lateral direction. When the steel plate moves in the lateral direction, the arc welding point on the steel plate moves in the lateral direction, but the position of the sample with respect to the arc welding point does not change. In such a state, an amount of spatters deposition of the film 3 formed on the sample is measured. Then, the spatter adhesion is evaluated as a spatter deposition rate per unit area (hereinafter, may also be simply referred to as a spatter deposition rate or a spatter adhesion rate) obtained by dividing the amount of the spatter deposition by an area of the film 3 and a welding time.

In a case in which the spatter adhesion is evaluated using the device illustrated in Fig. 3, when the spatter deposition rate is 0.7 mg/min/cm² or less, it can be evaluated that the spatter adhesion is satisfactory. The criterion of the spatter deposition rate being 0.7 mg/min/cm² or less corresponds to a rate in which the number of days required for false detection due to the spatter adhesion is one week when a proximity sensor is used at a welding site.

### (Maintenance durability)

The maintenance durability is evaluated by ease of the film 3 becoming scratched. More specifically, it is evaluated according to Japanese Industrial Standards (JIS).

It is evaluated by an amount of wear of the film 3 measured by a method in accordance with any of JIS K 7218 A to C methods.

An amount of wear of the film 3 per unit time, that is, a scratching rate (unit: nm/min) of the film 3 is measured by, for example, a method in accordance with JIS K 7218 B method. Then, this measured value is evaluated as the maintenance durability. In such an evaluation, for example, when the scratching rate of the film 3 is 20 nm/min or less, it can be evaluated that the maintenance durability is satisfactory. The criterion of the scratching rate of the film 3 being 20 nm/min or less corresponds to a maintenance work cycle of one year when it is used at welding sites.

The present invention is not limited to the above-described embodiments, and various modifications can be made within the scope described in the claims, and embodiments obtained by appropriately combining the technical means disclosed in each embodiment are also included in the technical scope of the present invention. Further, new technical features can be formed by combining the technical means disclosed in each embodiment.

As described above, an electronic article according to the embodiment of the present invention includes an underlayer member and a film formed on a surface of the underlayer member, in which the film is made of a calcined and cured product of a film solution of a binder resin containing a fluorine-based resin and a ceramic filler, and the fluorine-based resin is increasingly distributed toward a surface of the film on a side opposite to the underlayer member.

Also, a method for forming a film according to the embodiment of the present invention is a method for forming a film in which a film is formed on an underlayer member as described above, and includes an application step of applying a film solution of a binder resin containing a fluorine-based resin and a ceramic filler on a surface of the underlayer member, and a calcination and curing step of calcinating the film solution by heating to a temperature within a range from a higher temperature of a melting point of the fluorine-based resin and a melting point of the binder resin to a lower temperature of a decomposition temperature of the fluorine-based resin and a decomposition temperature of the binder resin, and curing the film solution.

Further, as described above, a film according to the embodiment of the present invention is a film formed on a surface of an underlayer member, in which the film is made of a calcined and cured product of a film solution of a binder resin containing a fluorine-based resin and a ceramic filler, and the fluorine-based resin is increasingly distributed toward a surface on an opposite side to the underlayer member.

In the method for forming a film according to the embodiment of the present invention, when a calcination temperature of the film solution is set as described above, the solvent contained in the film solution is vaporized into a gas. Also, the binder resin melts to a liquid and improves wettability with respect to the underlayer member. Thereby, the film solution is cured in a state of being wet and spread on the surface of the underlayer member. As a result, the film, which is a cured product of the solution, improves adhesion to the underlayer member.

Also, when the calcination temperature is set to be equal to or higher than the melting point of the fluorine-based resin, in the film, the fluorine-based resin is increasingly distributed toward a surface of the film on an opposite side to the underlayer member. Therefore, since a layer made of a melt of the fluorine-based resin having water repellency is formed on a surface on the above-described opposite side of the film exposed to the outside, spatters cannot easily adhere to the film.

Therefore, according to the above configuration, it is possible to realize an electronic article in which both reduction in adhesion of spatters to the electronic article main body and improvement in maintenance durability of the film are achieved.

In the electronic article and the method for forming a film according to the above-described embodiment, it is preferable that 1% by weight or more and 6% by weight or less of the ceramic filler is contained in the film solution. Thereby, both reduction in adhesion of spatters to the electronic article main body and improvement in maintenance durability of the film can be achieved

In the electronic article according to the above-described embodiment, a surface roughness Ra of the surface of the underlayer member is preferably greater than 0.3 µm. Also, in the method for forming a film according to one aspect described above, it is preferable to include a surface processing treatment step of performing a surface processing treatment on the underlayer member to have the surface roughness Ra of 0.3 µm or more. Thereby, adhesion between the underlayer member and the film is further improved.

In the electronic article and the method for forming a film according to the above-described embodiment, the fluorine-based resin is preferably at least one resin selected from the group consisting of polytetrafluoroethylene (PTFE), a tetrafluoroethylene-perfluoroalkyl vinyl ether copolymer (PFA), a tetrafluoroethylene-hexafluoropropylene copolymer (FEP), an ethylene-tetrafluoro ethylene copolymer (ETFE), polyvinylidene fluoride (PVDF), polychlorotrifluoroethylene (PCTFE), and an ethylene-chlorotrifluoroethylene copolymer (ECTFE). Thereby, both reduction in adhesion of spatters to the electronic article main body and improvement in maintenance durability of the film can be achieved.

In the electronic article and the method for forming a film according to the above-described embodiment, the binder resin is preferably a resin which dissolves in a solvent of the film solution. Thereby, both reduction in adhesion of spatters to the electronic article main body and improvement in maintenance durability of the film can be achieved.

In the electronic article according to the above-described embodiment, the underlayer member is preferably a housing that constitutes a proximity sensor. Thereby, both reduction in adhesion of spatters to the proximity sensor and improvement in maintenance durability of the film can be achieved.

### [Examples]

Hereinafter, the present invention will be described in more detail according to examples and comparative examples, but the present invention is not limited to these examples.

### [Measurement method]

Measurements in examples and comparative examples were performed by the following methods.

### (1) Surface roughness

The surface roughness Ra was calculated in accordance with Japanese Industrial Standards JIS B 0601.

### (2) Maintenance durability

A scratching rate of the film 3 was measured in accordance with a B method of JIS K 7218 of Japanese Industrial Standards. More specifically, a sample (the film 3) to which a predetermined load is applied is brought into contact with a rotating plate rotating at a predetermined rotation speed. A contactor was provided at a position of the rotating plate with which the sample is brought into contact, and an amount of scratching of the sample by the contactor was measured. Then, the measured value was divided by a rotation time to calculate an amount of scratching of the film 3 per unit time, that is, a scratching rate of the film 3. When the scratching rate of the film 3 was 20 nm/min or less, maintenance durability was evaluated as satisfactory (o). On the other hand, when the scratching rate of the film 3 exceeded 20 nm/min, the maintenance durability was evaluated as poor (×).

Specific settings of a rotation speed of the rotating plate, a load on the sample, and the contactor are as follows.

Load on the sample: 1000 g
Rotation speed of the rotating plate: 0.6 m/s
Contactor: aluminum ball of Φ10 mm

### (3) Water contact angle

A water contact angle of the film 3 was calculated in accordance with the provisions of JIS K 6894 of Japanese Industrial Standards. Further, purified water was used as a dropping liquid with respect to the film 3, and a droplet diameter was set to Φ2 mm.

### (4) Spatter adhesion

Spatter adhesion was evaluated using the device illustrated in Fig. 3. When a spatter deposition rate was 0.7 mg/min/cm² or less, the spatter adhesion was evaluated as satisfactory (○). On the other hand, when the spatter deposition rate exceeded 0.7 mg/min/cm², the spatter adhesion was evaluated as poor (×).

### [Example 1]

First, a surface processing treatment by shot blasting of #100 alumina particles was performed on the underlayer member 1 made of stainless steel SUS304 for 20 seconds. Then, after the underlayer member 1 is heated at 120°C for 20 minutes, the film solution 2 was applied to the surface processing treatment surface 1a using a spray coating method. The film solution 2 contains PAI as the binder resin, PTFE as the fluorine-based resin, and SiC as the ceramic filler, and the solvent is NMP. With respect to the film solution 2, a concentration of PAI is 10% by weight, a concentration of PTFE is 5% by weight, and a concentration of the ceramic filler is 3% by weight.

Next, the underlayer member 1 on which the film solution 2 was applied was calcinated at a calcination temperature of 280°C and a calcination time of 40 minutes to cure the film solution 2. Then, the underlayer member 1 on which the film 3 made of a calcined and cured product of the film solution 2 was formed was obtained.

### [Example 2]

The underlayer member 1 on which the film 3 made of a calcined and cured product of the film solution 2 was formed was obtained by the same method as that in example 1 except that a surface processing treatment by shot blasting of #100 alumina particles was performed on the underlayer member 1 made of stainless steel SUS304 for 10 seconds.

### [Example 3]

The underlayer member 1 on which the film 3 made of a calcined and cured product of the film solution 2 was formed was obtained by the same method as that in example 1 except that a surface processing treatment by shot blasting of #100 alumina particles was performed on the underlayer member 1 made of stainless steel SUS304 for 5 seconds.

### [Comparative example 1]

The underlayer member 1 on which the film 3 made of a calcined and cured product of the film solution 2 was formed was obtained by the same method as that in example 1 except that the surface processing treatment was not performed on the underlayer member 1.

### [Comparative example 2]

The underlayer member 1 on which the film 3 made of a calcined and cured product of the film solution 2 was formed was obtained by the same method as that in example 1 except that a surface processing treatment was performed on the underlayer member 1 by acid etching with a liquid mixture of sulfuric acid/sodium chloride.

For the films 3 of example 1 and comparative examples 1 and 2, the surface roughness Ra was measured, and the scratching rate was measured to evaluate the maintenance durability. The evaluation results are shown in Table 1.

**[Table 1]**

| Underlayer treatment | Surface roughness Ra (µm) | Maintenance durability * Scratching rate (nm/min) |
|---|---|---|
| (Example 1) Blasting treatment | 1.069 | 16.0 (○) |
| (Example 2) Blasting treatment | 0.790 | 16.8 (○) |
| (Example 3) Blasting treatment | 0.289 | 18.2 (○) |
| (Comparative example 1) No treatment | 0.075 | 966.8(×) |
| (Comparative example 2) Acid etching treatment | 0.130 | 108.0(×) |

As shown in Table 1, it was ascertained that the film 3 of example 1 on which the blasting treatment was performed on the underlayer member 1 had satisfactory maintenance durability. Also, it was ascertained from the measured value of the surface roughness Ra of the surface processing treatment surface 1a of the underlayer member 1 in example 1 that the maintenance durability was satisfactory when the surface roughness Ra of the surface processing treatment surface 1a was 0.3 µm or more.

### [Example 4]

The underlayer member 1 on which the film 3 made of a calcined and cured product of the film solution 2 was formed was obtained by the same method as that in example 1 except that a concentration of the ceramic filler with respect to the film solution 2 was set to 1% by weight and a calcination temperature was set to 360°C.

### [Example 5]

The underlayer member 1 on which the film 3 made of a calcined and cured product of the film solution 2 was formed was obtained by the same method as that in example 1 except that the concentration of the ceramic filler with respect to the film solution 2 was set to 3% by weight and the calcination temperature was set to 360°C.

### [Example 6]

The underlayer member 1 on which the film 3 made of a calcined and cured product of the film solution 2 was formed was obtained by the same method as that in example 1 except that the concentration of the ceramic filler with respect to the film solution 2 was set to 6% by weight and the calcination temperature was set to 360°C.

### [Comparative example 3]

The underlayer member 1 on which the film 3 made of a calcined and cured product of the film solution 2 was formed was obtained by the same method as that in example 1 except that the concentration of the ceramic filler with respect to the film solution 2 was set to 0% by weight and the calcination temperature was set to 360°C.

### [Comparative example 4]

The underlayer member 1 on which the film 3 made of a calcined and cured product of the film solution 2 was formed was obtained by the same method as that in example 1 except that the concentration of the ceramic filler with respect to the film solution 2 was set to 10% by weight and the calcination temperature was set to 360°C.

For the films 3 of examples 4 to 6 and comparative examples 3 and 4, the scratching rate and the spatter adhesion rate were measured to evaluate the maintenance durability and the spatter adhesion. The evaluation results are shown in Table 2.

**[Table 2]**

| | Amount of ceramic filler (wt%) | Maintenance durability * Scratching rate (nm/min) | Spatter adhesion * Spatter adhesion rate (mg/min/cm²) |
|---|---|---|---|
| (Example 4) | 1 | 18.0 (○) | 0.32 (○) |
| (Example 5) | 3 | 13.7 (○) | 0.59 (○) |
| (Example 6) | 6 | 14.3 (○) | 0.69 (○) |
| (Comparative example 3) | 0 | 830.8 (×) | 0.18 (○) |
| (Comparative example 4) | 10 | 15.6 (○) | 1.63 (×) |

From the results in Table 2, it was ascertained that the maintenance durability was satisfactory when the concentration of the ceramic filler was 5 to 20% by weight. Also, it was ascertained that the spatter adhesion was satisfactory when the concentration of the ceramic filler was 0 to 12% by weight. From these results, when the concentration of the ceramic filler was 5 to 12% by weight, both the maintenance durability and the spatter adhesion were satisfactory, and both improvement in the maintenance durability and improvement in the spatter adhesion could be realized.

### [Example 7]

The underlayer member 1 on which the film 3 made of a calcined and cured product of the film solution 2 was formed was obtained by the same method as that in example 1 except that the concentration of the ceramic filler with respect to the film solution 2 was set to 1% by weight and the calcination temperature was set to 360°C.

### [Example 8]

The underlayer member 1 on which the film 3 made of a calcined and cured product of the film solution 2 was formed was obtained by the same method as that in example 1 except that the concentration of the ceramic filler with respect to the film solution 2 was set to 1% by weight and the calcination temperature was set to 340°C.

### [Comparative example 5]

The underlayer member 1 on which the film 3 made of a calcined and cured product of the film solution 2 was formed was obtained by the same method as that in example 1 except that the concentration of the ceramic filler with respect to the film solution 2 was set to 1% by weight and the calcination temperature was set to 320°C.

### [Comparative example 6]

The underlayer member 1 on which the film 3 made of a calcined and cured product of the film solution 2 was formed was obtained by the same method as that in example 1 except that the concentration of the ceramic filler with respect to the film solution 2 was set to 1% by weight and the calcination temperature was set to 300°C.

### [Comparative example 7]

The underlayer member 1 on which the film 3 made of a calcined and cured product of the film solution 2 was formed was obtained by the same method as that in example 1 except that the concentration of the ceramic filler with respect to the film solution 2 was set to 1% by weight and the calcination temperature was set to 280°C.

The water contact angle was measured for the films 3 of examples 7 and 8 and comparative examples 5 to 7. Also, for the films 3 of these examples and comparative examples, the scratching rate and the spatter adhesion rate were measured to evaluate the maintenance durability and the spatter adhesion. The evaluation results are shown in Table 3.

**[Table 3]**

| | Calcination temperature | Water contact angle (deg) | Maintenance durability * Scratching rate (nm/min) | Spatter adhesion * Spatter adhesion rate (mg/min/cm ²) |
|---|---|---|---|---|
| (Example 7) | 360°C | 113.9 | 13.7 (○) | 0.59 (○) |
| (Example 8) | 340°C | 113.6 | 14.4(○) | 0.61 (○) |
| (Comparative example 5) | 320°C | 95.8 | 24.0 (×) | 0.80 (×) |
| (Comparative example 6) | 300°C | 95.5 | 54.0 (×) | 0.82 (×) |
| (Comparative example 7) | 280°C | 86.7 | 108.0 (×) | 1.07 (×) |

From the results in Table 3, both the maintenance durability and the spatter adhesion were satisfactory in the films 3 of examples 7 and 8 whose calcination temperature were each 340°C and 360°C. On the other hand, both the maintenance durability and the spatter adhesion were poor in the films 3 of comparative examples 5 to 7 in which the calcination temperatures were set to be equal to or lower than a melting point of PTFE. From these results, it was ascertained that both improvement in the maintenance durability and improvement in the spatter adhesion could be realized in the film 3 when the calcination temperature was set to a temperature equal to or higher than the melting point of PTFE. It is thought that this is because, when the calcination temperature is set to a temperature equal to or higher than the melting point of PTFE, wettability of the film solution 2 with respect to the underlayer member 1 has been improved, and adhesion of the film 3, which is a calcined and cured product of the film solution 2, to the underlayer member 1 has been improved.

Also, it was ascertained that the films 3 of examples 7 and 8 had a significantly higher water contact angle than the films 3 of comparative examples 5 to 7. It is thought that the fluorine-based resin-rich layer 3a having water repellency has been formed on surfaces of the films 3 of examples 7 and 8. In order to confirm this, a concentration distribution of the fluorine-based resin with respect to a depth from the surface of the film was measured for the film 3 of example 7 in which the calcination temperature was 360°C and the film 3 of comparative example 7 in which the calcination temperature was 280°C. The results are shown in Fig. 4. (a) of Fig. 4 is a graph showing a concentration distribution of the fluorine-based resin with respect to a depth from a film outer surface of the film 3 of comparative example 7, and (b) of Fig. 4 is a graph showing a concentration distribution of the fluorine-based resin with respect to a depth from a film outer surface of the film 3 of example 7. In (a) and (b) of Fig. 4, the concentration of the fluorine-based resin is denoted by "F concentration (wt%)."

As shown in (a) of Fig. 4, it is ascertained that the fluorine-based resin is uniformly distributed with respect to the depth from the film outer surface of the film 3 in the film 3 of comparative example 7 in which the calcination temperature is 280 °C. On the other hand, as shown in (b) of Fig. 4, it is ascertained that a concentration gradient of the fluorine-based resin whose concentration increases toward the film outer surface of the film 3 has been formed in the film 3 of example 5 in which the calcination temperature is 360°C. From this, it is ascertained that the fluorine-based resin-rich layer 3a having water repellency has been formed on the surface of the film 3 in example 7.

### [Industrial Applicability]

The present invention can be utilized in electronic devices such as proximity sensors, cables, connectors, and actuators used in welding sites.

### [Reference Signs List]

1 Underlayer member
1a Surface processing treatment surface
2 Film solution
3 Film
3a Fluorine-based resin-rich layer
3b Solution cured layer
10 Electronic article

## Claims

1. An electronic article comprising:
an underlayer member; and
a film formed on a surface of the underlayer member, wherein
the film is made of a calcined and cured product of a film solution of a binder resin containing a fluorine-based resin and a ceramic filler, and
the fluorine-based resin is increasingly distributed toward a surface of the film on a side opposite to the underlayer member.

2. The electronic article according to claim 1, wherein 1% by weight or more and 6% by weight or less of the ceramic filler is contained in the film solution.

3. The electronic article according to claim 1 or 2, wherein a surface roughness Ra of the surface of the underlayer member is greater than 0.3 µm.

4. The electronic article according to any one of claims 1 to 3, wherein the fluorine-based resin is at least one resin selected from the group consisting of polytetrafluoroethylene (PTFE), a tetrafluoroethylene-perfluoroalkyl vinyl ether copolymer (PFA), a tetrafluoroethylene-hexafluoropropylene copolymer (FEP), an ethylene-tetrafluoroethylene copolymer (ETFE), polyvinylidene fluoride (PVDF), polychlorotrifluoroethylene (PCTFE), and an ethylene-chlorotrifluoroethylene copolymer (ECTFE).

5. The electronic article according to any one of claims 1 to 4, wherein the binder resin is a resin which dissolves in a solvent of the film solution.

6. The electronic article according to any one of claims 1 to 5, wherein the underlayer member is a housing which constitutes a proximity sensor.

7. A method for forming a film which forms a film on an underlayer member, comprising:
an application step of applying a film solution of a binder resin containing a fluorine-based resin and a ceramic filler on a surface of the underlayer member, and
a calcination and curing step of calcinating the film solution by heating to a temperature within a range from a higher temperature of a melting point of the fluorine-based resin and a melting point of the binder resin to a lower temperature of a decomposition temperature of the fluorine-based resin and a decomposition temperature of the binder resin, and curing the film solution.

8. The method for forming a film according to claim 7, further comprising a surface processing treatment step of performing a surface processing treatment on the underlayer member to have a surface roughness Ra of 0.3 µm or more.

9. The method for forming a film according to claim 7 or 8, wherein 1% by weight or more and 6% by weight or less of the ceramic filler is contained in the film solution.

10. The method for forming a film according to any one of claims 7 to 9, wherein the fluorine-based resin is at least one resin selected from the group consisting of polytetrafluoroethylene (PTFE), a tetrafluoroethylene-perfluoroalkyl vinyl ether copolymer (PFA), a tetrafluoroethylene-hexafluoropropylene copolymer (FEP), an ethylene-tetrafluoroethylene copolymer (ETFE), polyvinylidene fluoride (PVDF), polychlorotrifluoroethylene (PCTFE), and an ethylene-chlorotrifluoroethylene copolymer (ECTFE).

11. The method for forming a film according to any one of claims 7 to 10, wherein the binder resin is a resin which dissolves in a solvent of the film solution.

12. A film which is a film formed on a surface of an underlayer member, wherein
the film is made of a calcined and cured product of a film solution of a binder resin containing a fluorine-based resin and a ceramic filler, and
the fluorine-based resin is increasingly distributed toward a surface on an opposite side to the underlayer member.
